(19) Europäisches Patentamt
European Patent Office
Office européen des brevets

(11) **EP 2 095 176 B1**

(12) **FASCICULE DE BREVET EUROPEEN**

(45) Date de publication et mention
de la délivrance du brevet:
**16.07.2014 Bulletin 2014/29**

(21) Numéro de dépôt: **07866471.1**

(22) Date de dépôt: **30.10.2007**

(51) Int Cl.:
***G02C 7/06*** *(2006.01)*

(86) Numéro de dépôt international:
**PCT/FR2007/001802**

(87) Numéro de publication internationale:
**WO 2008/065266 (05.06.2008 Gazette 2008/23)**

(54) **LENTILLE OPHTALMIQUE PROGRESSIVE**

PROGRESSSIVE AUGENOPTISCHE LINSE

PROGRESSIVE OPHTHALMIC LENS

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **07.11.2006 FR 0609702**

(43) Date de publication de la demande:
**02.09.2009 Bulletin 2009/36**

(73) Titulaire: **Essilor International
(Compagnie Générale d'Optique)
94227 Charenton Cedex (FR)**

(72) Inventeur: **ALLIONE, Pascal
94220 Charenton Le Pont (FR)**

(74) Mandataire: **Hirsch & Associés
58, avenue Marceau
75008 Paris (FR)**

(56) Documents cités:
**FR-A1- 2 489 971**

**Description**

La présente invention a pour objet une lentille ophtalmique et un procédé de détermination d'une telle lentille ophtalmique.

Toute lentille ophtalmique, destinée à être portée dans une monture, est associée à une prescription. La prescription en matière ophtalmique peut comprendre une prescription de puissance, positive ou négative, ainsi qu'une prescription d'astigmatisme. Ces prescriptions correspondent à des corrections à apporter au porteur des lentilles pour corriger les défauts de sa vision. Une lentille est montée dans la monture en fonction de la prescription et de la position des yeux du porteur par rapport à la monture.

Dans les cas les plus simples, la prescription se réduit à une prescription de puissance. La lentille est dite unifocale et présente une symétrie de révolution. Elle est simplement montée dans la monture de sorte que la direction principale du regard du porteur coïncide avec l'axe de symétrie de la lentille.

Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition (ou progression de puissance) représentative de l'incrément de puissance entre la vision de loin et la vision de près; ceci revient à une prescription de puissance en vision de loin et à une prescription de puissance en vision de près. Les lentilles adaptées aux porteurs presbytes sont des lentilles multifocales progressives; ces lentilles sont décrites par exemple dans FR-A-2 699 294, US-A-5 270 745 ou US-A-5 2 72 495, FR-A-2 683 642, ou encore FR-A-2 704 327. Les lentilles ophtalmiques multifocales progressives comprennent une zone de vision de loin, une zone de vision de près, une zone de vision intermédiaire et une méridienne principale de progression sensiblement ombilique traversant ces trois zones. Elles sont généralement déterminées par optimisation, à partir d'un certain nombre de contraintes imposées aux différentes caractéristiques de la lentille. Ces lentilles sont généralistes, en ce qu'elles sont adaptées aux différents besoins courants du porteur.

On définit des familles de lentilles multifocales progressives, chaque lentille d'une famille étant caractérisée par une addition, qui correspond à la variation de puissance entre la zone de vision de loin et la zone de vision de près. Plus précisément, l'addition, notée A. correspond à la variation de puissance entre un point VL de la zone de vision de loin et un point VP de la zone de vision de près, qui sont appelés respectivement point de contrôle de la vision de loin et point de contrôle de la vision de près, et qui représentent les points d'intersection du regard et de la surface de la lentille pour une vision à l'infini et pour une vision de lecture.

Indépendamment de la prescription de puissance, il peut être proposé à un porteur une prescription d'astigmatisme. Une telle prescription est effectuée par l'ophtalmologiste, en vision de loin, sous la forme d'un couple formé d'une valeur d'axe (en degrés) et d'une valeur d'amplitude (en dioptries). Sur une surface, la valeur d'amplitude représente la différence $1/R_1 - 1/R_2$ entre les courbures principales; la valeur d'axe représente l'orientation, par rapport à un axe de référence et dans un sens de rotation convenu; de la courbure maximale $1/R_1$. En termes de prescription, la valeur d'amplitude représente la différence entre les puissances minimales et maximales dans une direction donnée et l'axe représente l'orientation de la puissance maximale. On utilise le terme astigmatisme pour désigner le couple (amplitude, angle); bien qu'il s'agisse d'un abus de langage, on utilise aussi parfois ce terme pour désigner l'amplitude de l'astigmatisme. Le contexte permet à l'homme du métier de comprendre quelle acception est entendue.

Dans une même famille de lentilles, l'addition varie d'une lentille à l'autre de la famille entre une valeur d'addition minimale et une valeur d'addition maximale. Habituellement, les valeurs minimale et maximale d'addition sont respectivement de 0.75 dioptrie et 3.5 dioptries, et l'addition varie de 0.25 dioptrie en 0.25 dioptrie d'une lentille à l'autre de la famille.

Des lentilles de même addition different par la valeur de la sphère moyenne en un point de référence, appelée aussi base. On peut par exemple choisir de mesurer la base au point VL de contrôle de la vision de loin. On définit ainsi par le choix d'un couple (addition, base) un ensemble ou jeu de faces avant asphériques pour lentilles multifocales progressives. Habituellement, on peut ainsi définir 5 valeurs de bases et 12 valeurs d'additions, soit soixante faces avant. Dans chacune des bases, on réalise une optimisation pour une puissance donnée. Cette méthode connue permet, à partir de lentilles semi-finies, dont seule la face avant est conformée, de préparer des lentilles adaptées à chaque porteur, par simple usinage d'une face arrière sphérique ou torique.

Ainsi, les lentilles multifocales progressives comportent habituellement une face avant asphérique, qui est la face opposée au porteur des lunettes, et une face arrière sphérique ou torique, dirigée vers le porteur des lunettes. Cette face sphérique ou torique permet d'adapter la lentille à l'amétropie de l'utilisateur, de sorte qu'une lentille multifocale progressive n'est généralement définie que par la surface complexe de sa face sphérique. Comme il est bien connu, une surface asphérique est généralement définie par l'altitude de tous ses points. Une lentille multifocale progressive peut ainsi être définie, en tout point de sa surface complexe, par des caractéristiques géométriques comprenant une valeur de sphère moyenne et une valeur de cylindre ; ces caractéristiques surfaciques de sphère et de cylindre seront définies en détails plus loin.

En caractérisation géométrique, les points sur la surface complexe de la lentille sont repérés par rapport à un repère orthonormé (X, Y, Z) lié à la face avant de la lentille et ayant pour origine le centre géométrique (0, 0) de la lentille. Par convention, l'axe X s'étend horizontalement et l'axe Y s'étend verticalement lorsque l'on considère la lentille dans les conditions du porté. L'axe Z est normal à la face avant de la lentille et permet de repérer l'altitude de chaque point de la surface complexe. La méridienne principale de progression est généralement confondue avec l'axe Y en partie haute de la lentille - dans la zone de vision de loin - et peut présenter une convergence nasale en partie basse de la lentille - dans la zone de vision de près.

Par ailleurs, une lentille multifocale progressive peut aussi être définie par des caractéristiques optiques prenant en considération la situation du porteur des lentilles. En effet, les lois de l'optique des tracés de rayons entraînent l'apparition de défauts optiques quand les rayons s'écartent de l'axe central de toute lentille. On s'intéresse classiquement aux aberrations dites défaut de puissance et défaut d'astigmatisme. Ces aberrations ont déjà été bien identifiées dans l'art antérieur et des améliorations ont été proposées. Par exemple, le document WO-A-98 12590 décrit une méthode de détermination par optimisation d'un jeu de lentilles ophtalmiques multifocales progressives. Ce document propose de définir le jeu de lentilles en considérant les caractéristiques optiques des lentilles et notamment la puissance porteur et l'astigmatisme oblique, dans les conditions du porté. La lentille est optimisée par tracé de rayons, à partir des conditions du porté et de l'espace objet visé.

Le document FR-A-2 489 971 décrit une lentille multifocale progressive sur laquelle les aberrations latérales dans la zone de progression sont réduites. Ce document propose une lentille présentant des surfaces sphériques en vision de loin et en vision de près raccordées par au moins deux lignes ombiliques quasi-isodistantes de la méridienne principale de progression. La surface progressive centrale est alors construite en limitant le cylindre à 0.25 dioptries, cette surface centrale étant raccordée avec continuité aux plans tangents des zones de vision de loin et de vision de près. Les surfaces latérales sont alors construites en respectant des conditions de raccordement continu avec le plan tangent de la surface du canal et des zones de vision de loin et de vision de près.

Le document WO 2004/070426 décrit une lentille multifocale progressive dont les dérivations prismatiques horizontales sont contrôlées le long de la méridienne principale de progression. En particulier, la puissance de réfringence prismatique horizontale varie progressivement le long de la méridienne indépendamment de la progression de puissance sphérique. Une telle lentille permet d'apporter un meilleur confort aux porteurs myopes. Ce document se concentre sur le contrôle de la méridienne de la lentille, les zones périphériques étant alors optimisées selon une quelconque méthode connue.

L'invention propose un procédé de détermination d'une surface complexe d'une lentille ophtalmique progressive mis en oeuvre par ordinateur, le procédé comprenant les étapes consistant à :

- choisir une surface complexe de départ présentant une méridienne principale de progression avec une addition de puissance entre un point de référence en vision de loin et un point de référence en vision de près ;
- sélectionner une bande centrale incluant la méridienne principale de progression ;
- reproduire la bande centrale sélectionnée de part et d'autre de la méridienne principale de progression ;
- construire la surface complexe de la lentille en reproduisant successivement des bandes sélectionnées vers la périphérie de la lentille.

Selon un mode de réalisation, le procédé comprend en outre une étape consistant à :

- transformer la surface complexe de départ avec un premier opérateur de transformation,

l'étape de construction de la surface complexe comprenant alors les étapes consistant à :

- construire une surface complexe périodique ou quasi-périodique en reproduisant successivement des bandes sélectionnées sur une surface correspondant à la surface de départ moins la surface de départ transformée ; et
- ajouter à cette surface complexe périodique ou quasi-périodique une surface de départ transformée avec un deuxième opérateur de transformation.

Selon les modes de réalisation, le premier opérateur de transformation annule la valeur de sphère au point de contrôle en vision de loin ou réduit la valeur de sphère au point de contrôle en vision de près. Le deuxième opérateur de transformation peut être identique au premier opérateur de transformation.

Selon les modes de réalisation, l'étape de reproduction d'une bande sélectionnée consiste à juxtaposer la bande sélectionnée ou à symétriser la bande sélectionnée.

Selon un mode de réalisation, l'étape de construction de la surface complexe de la lentille comprend en outre une étape consistant à translater une bande centrale élargie ou diminuée pour la juxtaposer aux bandes construites.

D'autres avantages et caractéristiques de l'invention apparaîtront à la lecture de la description qui suit des modes de réalisation de l'invention, donnés à titre d'exemple et en référence aux dessins qui montrent:

- figure 1, un schéma de principe d'un premier mode de réalisation du procédé de détermination d'une surface complexe selon l'invention ;
- figure 2, un schéma de principe d'un deuxième mode de réalisation du procédé de détermination d'une surface complexe selon l'invention ;
- figure 3, un graphe illustrant la construction d'un réseau quasi-périodique symétrique ;
- figure 4, un graphe illustrant la construction d'un réseau quasi-périodique juxtaposé ;
- figure 5, un schéma illustrant la décomposition d'une surface complexe en deux nappes dont l'une est sphérique ;
- figure 6, un schéma de principe d'un troisième mode de réalisation du procédé de détermination d'une surface complexe selon l'invention ;
- figure 7, un schéma illustrant la sélection de la bande centrale dans une variante du troisième mode de réalisation du procédé selon l'invention ;
- figure 8, un schéma de principe illustrant la construction de la surface complexe à partir de la bande centrale de la figure 7 ;
- figure 9, une représentation tridimensionnelle de la surface progressive obtenue par la périodisation d'une bande centrale selon le schéma de la figure 1 ;
- figure 10, une représentation tridimensionnelle de la surface progressive obtenue par la périodisation d'une bande centrale déclinée selon le schéma de la figure 1 ;
- figure 11, un graphe des courbures principales et de la sphère sur la méridienne d'une lentille selon un premier exemple de réalisation de l'invention ;
- figures 12 et 13, des cartes de sphère et de cylindre respectivement de la lentille de la figure 11 ;
- figure 14, un graphe de puissance optique porteur le long de la méridienne de la lentille selon le premier exemple de réalisation de l'invention ;
- figure 15, un graphe de puissance optique porteur le long de la méridienne de la lentille de référence utilisée pour sélectionner la bande centrale à périodiser pour définir la lentille des figures 11 à 14 ;
- figures 16 et 17, des cartes de puissance optique porteur respectivement de la lentille selon le premier exemple l'invention et de la lentille de référence ;
- figures 18 et 19, des cartes d'astigmatisme résultant respectivement sur la lentille selon le premier exemple de l'invention et sur la lentille de référence ;
- figures 20 et 21, des cartes de déviations prismatiques horizontales respectivement pour la lentille selon le premier exemple de l'invention et pour la lentille de référence ;
- figures 22 et 23, des cartes d'épaisseur du verre respectivement de la lentille selon l'invention et de la lentille de référence ;
- figures 24 et 25, des graphes des courbures principales et de la sphère sur la méridienne d'une lentille respectivement selon un deuxième exemple de réalisation de l'invention et pour une lentille de référence ;
- figures 26 et 27, des cartes de sphère respectivement pour les lentilles des figures 24 et 25 ;
- figures 28 et 29, des cartes de cylindre respectivement pour les lentilles des figures 24 et 25 ;
- figures 30 et 31, des graphes de puissance optique porteur le long de la méridienne d'une lentille respectivement selon un deuxième exemple de réalisation de l'invention et pour une lentille de référence ;
- figures 32 et 33, des cartes de puissance optique porteur respectivement de la lentille selon le deuxième exemple l'invention et de la lentille de référence ;
- figures 34 et 35, des cartes d'astigmatisme résultant respectivement sur la lentille selon le deuxième exemple de l'invention et sur la lentille de référence ;
- figures 36 et 37, des cartes de déviations prismatiques horizontales respectivement pour la lentille selon le deuxième exemple de l'invention et pour la lentille de référence ;
- figures 38 et 39, des cartes d'épaisseur du verre respectivement de la lentille selon l'invention et de la lentille de référence.

Dans la suite de la description, on considère, pour la simplicité de l'exposé, une première face de la lentille comme la face avant, opposée au porteur, et une deuxième face de la lentille comme la face arrière, dirigée vers le porteur.

On rappelle qu'en tout point d'une surface complexe, on peut définir des courbures principales $C_1$ et $C_2$ ramenées à l'indice optique définies comme :

$$C_1 = \frac{n-1}{R_1}$$

$$C_2 = \frac{n-1}{R_2}$$

où $R_1$ et $R_2$ sont les rayons de courbure maximal et minimal locaux exprimés en mètres, et n l'indice du matériau constituant la lentille.

On peut alors définir, en tout point de la surface complexe, une sphère moyenne Sph donnée par la formule:

$$Sph = \frac{C_1 + C_2}{2}$$

On définit aussi un cylindre Cyl, donné par la formule:

$$Cyl = |C_1 - C_2|$$

Les caractéristiques d'une surface complexe sur chaque face de la lentille peuvent ainsi être exprimées à l'aide de la sphère moyenne et du cylindre.

Comme mentionné précédemment, une lentille multifocale progressive peut être définie, indépendamment des sa ou ses surfaces complexes, par des caractéristiques optiques, à savoir une puissance et un astigmatisme, dans les conditions du porté.

Pour chaque direction du regard $(\alpha, \beta)$, on peut définir une puissance porteur et un astigmatisme résultant. On pourra se référer par exemple aux définitions données par Thierry Baudart, dans la publication « PAL performance analysis for torical prescription », Vision Science and its applications, Santa-Fe New Mexico, Feb. 1996 Technical Digest series Vol. 1. Pour une direction du regard, on considère un point M objet situé à une distance objet donnée. On détermine les points S et T entre lesquels se forme l'image de l'objet. La proximité mage PI est alors donnée par

$$PI = \frac{1}{2}\left(\frac{1}{JT} + \frac{1}{JS}\right)$$

tandis que la proximité objet PO est l'inverse de la distance entre le point M et le point J de la sphère des sommets. La puissance est définie comme la somme des proximité objet et image, soit

$$P = PO + PI = \frac{1}{MJ} + \frac{1}{2}\left(\frac{1}{JT} + \frac{1}{JS}\right)$$

L'amplitude de l'astigmatisme est donnée par

$$A = \left|\frac{1}{JT} - \frac{1}{JS}\right|$$

La puissance et l'astigmatisme peuvent être mesurés expérimentalement sur la lentille en utilisant un frontofocomètre; ils peuvent aussi être calculés par tracé de rayons dans les conditions du porté.

L'invention propose une lentille ophtalmique multifocale progressive présentant une surface complexe périodique ou quasi-périodique. En particulier, la surface complexe de la lentille selon l'invention présente un réseau horizontal de bandes, la direction horizontale étant entendue comme la direction de l'axe X dans le repère orthonormé de la lentille défini plus haut. Le réseau est dit horizontal en ce que les bandes de la surface complexe se succèdent selon l'axe X, chaque bande s'étendant sur toute la hauteur de la lentille. Les bandes du réseau ne sont pas forcément parallèles à l'axe Y de la lentille, ou tout au moins ne sont pas forcément parallèles à l'axe Y sur toute leur hauteur. Les bandes de la surface complexe de la lentille constituent un réseau en ce qu'elles présentent des valeurs similaires de certains paramètres. En particulier, au moins une quantité géométrique de la surface est sensiblement égale d'une bande à l'autre du réseau à une hauteur donnée ; c'est-à-dire que pour un point Y donné, au moins une quantité géométrique reste sensiblement la même pour toutes les bandes du réseau.

Cette quantité géométrique reproduite d'une bande à l'autre du réseau peut être, par exemple, les valeurs de sphère ou de cylindre, les variations horizontales ou verticales - les dérivées horizontales ou verticales - de sphère ou de cylindre, les valeurs d'altitudes des points, les dérivées horizontales ou verticales de l'altitude, ou une combinaison de ces quantités. Par exemple, la sphère peut être sensiblement constante en X sur toute la surface complexe de la lentille et le cylindre peut être sensiblement nul sur toute la surface complexe de la lentille.

Le réseau horizontal de bandes de la surface complexe peut être un réseau périodique - chaque bande a la même largeur - ou un réseau quasi-périodique - les bandes ont une largeur variable. En particulier, dans le cas d'un réseau quasi-périodique, la largeur des bandes pourra augmenter depuis le centre de la lentille vers la périphérie de la lentille.

Une telle surface complexe peut être obtenue par une construction particulière consistant à reproduire périodiquement ou quasi-périodiquement une bande centrale sélectionnée autour de la méridienne sur une surface complexe de départ. Cette bande centrale pourra être sélectionnée dans le canal ombilique de la surface de départ, c'est-à-dire dans la zone où le cylindre est faible voire nul. La surface complexe ainsi construite présente un cylindre limité sur l'ensemble de la surface tout en apportant l'addition de puissance requise. La surface de départ peut être choisie en fonction de différents critères respectés dans la zone centrale. Par exemple, une longueur de progression, une méridienne de progression sensiblement ombilique, une valeur limite de cylindre dans le canal ombilique, des valeurs limites de gradients de sphère ou de cylindre dans le canal ombilique, une variation progressive de la puissance de réfringence prismatique horizontale le long de la méridienne principale de progression, ou autre.

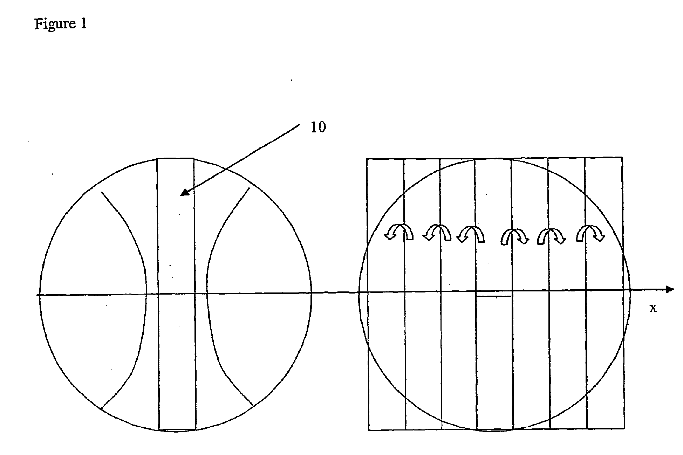

La figure 1 illustre schématiquement un premier mode de réalisation du procédé de détermination d'une surface complexe d'une lentille ophtalmique progressive selon l'invention.

La figure 1 montre à gauche la lentille de départ schématisée avec une méridienne principale de progression verticale et un couloir ombilique délimité par deux lignes d'iso-cylindre. Typiquement, la valeur des lignes iso-cylindre délimitant le couloir central d'une lentille ophtalmique est 0,25 dioptries, mais il est entendu que d'autres valeurs de cylindre peuvent être considérées. Une bande centrale 10 est alors sélectionnée, centrée sur la méridienne principale de progression. Cette bande centrale 10 est choisie avec une largeur limitée afin de limiter la valeur de cylindre et pour limiter les discontinuités optiques lors de la périodisation de la surface. La bande centrale doit aussi être choisie avec une largeur minimale pour éviter toute diffraction de lumière induite par la périodicité du réseau et pour permettre une fabrication de la surface avec des techniques de moulage ou de transfert. Une largeur de la bande centrale 10 comprise entre environ 0.1 mm et environ 10 mm est appropriée pour répondre aux contraintes mentionnées ci-dessus.

La figure 1 montre à droite la lentille selon l'invention schématisée avec la méridienne principale de progression verticale, la bande centrale (grisée) et le réseau horizontal de bandes obtenu par une périodisation de la bande centrale. La bande centrale a tout d'abord été reproduite de part et d'autre de la méridienne principale de progression ; puis chaque bande ainsi reproduite a elle-même été sélectionnée et reproduite vers la périphérie de la lentille. Cette reproduction de bande peut consister à symétriser la bande avec la ligne de raccord servant d'axe de symétrie, comme illustré sur la figure 1, ou à juxtaposer les bandes côte à côte. La reproduction des bandes par symétrie permet de conserver la continuité de la surface en Z, mais elle ne peut être mise en oeuvre que si la bande centrale est verticale, c'est-à-dire si la méridienne principale de progression est verticale sur toute la hauteur de la lentille de départ. Si la méridienne principale de progression présente une convergence, comme décrit dans le document FR-A-2 683 642, la bande centrale sera courbe et la reproduction par symétrie ne sera pas possible ; les bandes sélectionnées seront alors juxtaposées côte à côte.

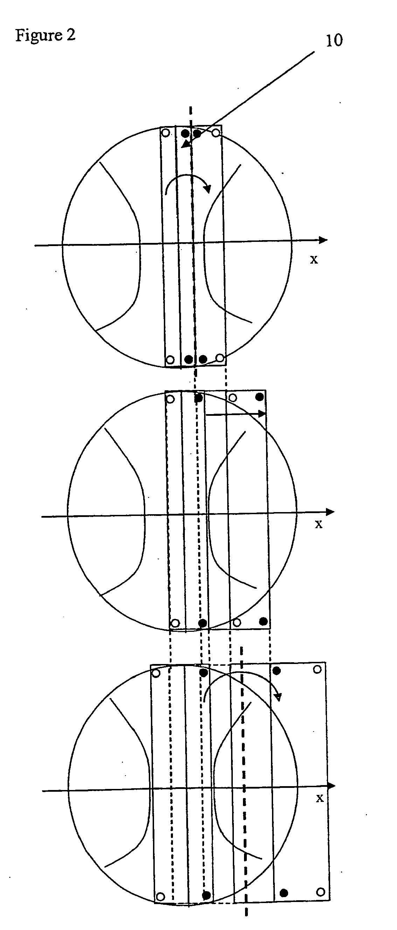

La figure 2 illustre schématiquement un deuxième mode de réalisation du procédé de détermination d'une surface complexe d'une lentille ophtalmique progressive selon l'invention. Selon ce second mode de réalisation, le réseau horizontal de bandes de la surface complexe à construire est quasi-périodique.

La figure 2 montre, en haut, la lentille de départ schématisée avec une méridienne principale de progression verticale et un couloir ombilique délimité par deux lignes d'iso-cylindre. Une bande centrale 10 est sélectionnée, centrée sur la méridienne principale de progression. Cette bande centrale 10 est reproduite de part et d'autre de la méridienne bien que la figure n'illustre la reproduction de la bande centrale que d'un côté. Selon le mode de réalisation illustré sur la figure 2, la bande sélectionnée est reproduite par symétrie, mais il est entendu qu'une reproduction par juxtaposition pourrait être envisagée.

La figure 2 montre, au milieu, une étape de translation suivant l'axe horizontal qui consiste à juxtaposer aux bandes construites une bande centrale élargie.

La figure 2 montre enfin, en bas, la répétition de l'étape de reproduction par symétrie d'une bande sélectionnée encore élargie ; le pas du réseau augmente donc depuis le centre vers la périphérie de la lentille ; le réseau est quasi-périodique.

On peut généraliser la construction d'une surface périodique ou quasi-périodique de la manière suivante.

Soit z = S(x,y) l'équation de la surface complexe de départ - ou surface de référence ; et soit z = T(x,y), l'équation de la nouvelle surface complexe quasi-périodisée. Pour construire T(x,y), on peut procéder comme suit.

On considère une suite $(x_i)_{i=1,...}$ de nombres alternés avec $x_i > 0$ si i impair, et $x_i < 0$ si i pair, et on pose $x_0 = 0$. Supposons que $|x_i| >$ constante indépendante de i.

On pose

$$\xi_0 = x_0$$
$$\xi_{i+1} = \xi_i + |x_{i+1} - x_i|$$

$(\xi_i)_{i=0,...}$ ainsi définie forme une suite positive strictement croissante.

On peut alors définir deux courbes en x (>0):

$$x_{quasi\_périodique\_1}(x) = x_{i[x]} + (x - \xi_{i[x]}) \qquad \text{si } i[x] \text{ est pair}$$
$$= x_{i[x]} - (x - \xi_{i[x]}) \qquad \text{si } i[x] \text{ est impair}$$

$$x_{quasi\_périodique\_2}(x) = x_{i[x]} + (x - \xi_{i[x]}) \qquad \text{si } i[x] \text{ est pair}$$
$$= x_{i[x]+1} - (x - \xi_{i[x]}) \qquad \text{si } i[x] \text{ est impair}$$

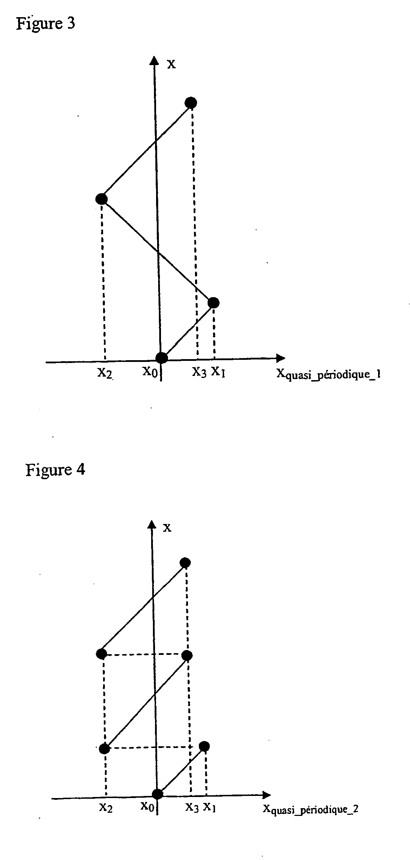

Les figures 3 et 4 illustrent graphiquement le procédé de construction de ces deux courbes. Pour les x<0, ces deux courbes se construisent de façon similaire. On remarque que la première courbe (figure 3) est continue alors que la seconde courbe (figure 4) est discontinue.

En effet, la première courbe (figure 3) correspond à une méthode de périodisation par symétrie. Une surface complexe quasi-périodique est ainsi définie par la relation z = T(x,y) = S($x_{quasi\_périodique\_1}$(x),y) ; cette surface étant continue sur les axes d'équation x=$\xi_i$.

Par exemple, si les $|x_i|$ sont constants avec $|x_i|$ = pas réseau/2 pour i=1,... on obtient alors une surface complexe telle que décrit en référence à la figure 1 avec un réseau de bandes périodique. Si les $|x_i|$ sont croissants on obtient un élargissement des bandes lorsqu'on s'éloigne de l'axe x=0 et on obtient alors une surface complexe telle que décrit en référence à la figure 2 avec un réseau de bandes quasi-périodique.

Par ailleurs, la deuxième courbe (figure 4) correspond à une méthode de périodisation par juxtaposition. Une surface complexe quasi-périodique est ainsi définie par la relation z = T(x,y) = S($x_{quasi\_périodique\_2}$(x),y) ; cette surface étant généralement discontinue sur les axes d'équation x=$\xi_i$.

Par exemple, si les $|x_i|$ sont constants avec $|x_i|$ = pas réseau/2 pour i=1,... on obtient alors une surface complexe périodique avec des bandes de même taille juxtaposées. Si les $|x_i|$ sont croissants on obtient un élargissement des bandes lorsqu'on s'éloigne de l'axe x=0 et on obtient alors une surface complexe telle que décrit en référence à la figure 2 avec un réseau de bandes quasi-périodique.

Les équations définies ci-dessus pour définir la surface complexe périodisée restent valables lorsque la méridienne n'est pas verticale et que la bande centrale sélectionnée n'est pas verticale.

On pose x= $\delta(y)$ l'équation de la méridienne ; on peut alors effectuer les deux mêmes types de périodisation par symétrie et par juxtaposition que dans le cas d'une méridienne verticale, en posant :

$$T(x,y) = S(x_{quasi\_périodique\_1}(x-\delta(y))+\delta(y),y)$$

$$T(x,y) = S(x_{quasi\_périodique\_2}(x-\delta(y))+\delta(y),y)$$

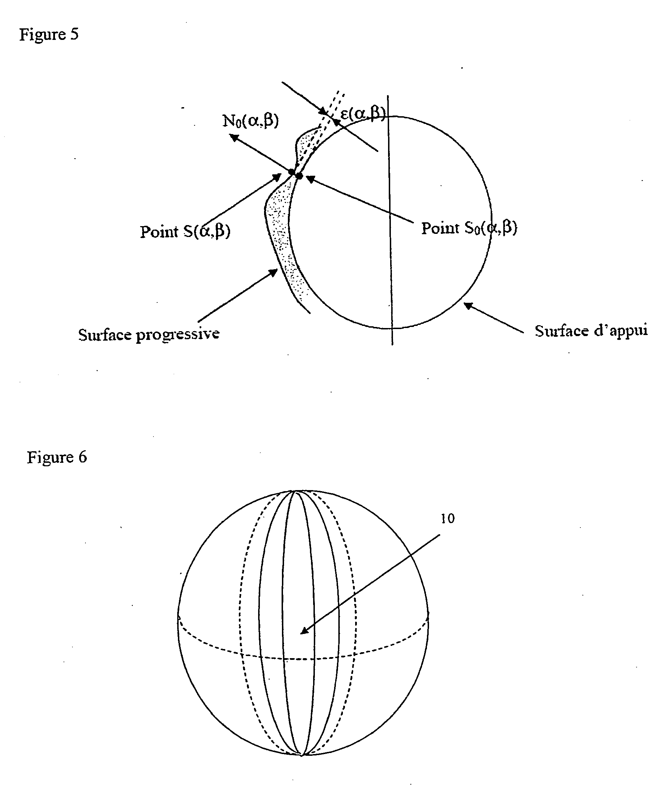

Les figures 5 et 6 illustrent schématiquement un troisième mode de réalisation du procédé de détermination d'une surface complexe d'une lentille ophtalmique progressive selon l'invention.

Ce troisième mode de réalisation est une généralisation du procédé de construction de la surface complexe en réseau selon l'invention dans le cas où l'on considère la surface de départ en coordonnées non cartésiennes ($\alpha,\beta$),

coordonnées sphériques par exemple. Dans ce mode de réalisation on pourra utiliser le procédé de périodisation - ou quasi-périodisation - sur l'une des coordonnées $\alpha$ ou $\beta$ ou sur une fonction numérique $\varepsilon(\alpha,\beta)$ de ces deux coordonnées, intervenant dans l'équation de la surface de référence.

On se place par exemple dans un système de coordonnées $(\alpha,\beta)$ qui peut être différent du système cartésien $(x,y)$ et on décompose l'équation de la surface progressive de départ dans ce système de coordonnées comme suit :

$$S(\alpha,\beta) = S_0 (\alpha,\beta) + \varepsilon(\alpha,\beta)\, N_0(\alpha,\beta)$$

Où

$S_0 (\alpha,\beta)$ est l'équation d'une surface sur laquelle s'appuie la surface progressive,
$N_0(\alpha,\beta)$ est la nonnale de cette surface au point $(\alpha,\beta)$. Cette surface d'appui peut par exemple être une sphère, et $\varepsilon(\alpha,\beta)$ le reste. Ce reste peut être symétrique par rapport à l'axe $\alpha=0$ mais ce n'est pas une restriction.

La figure 5 illustre une telle modélisation d'une surface complexe.
Le procédé de construction de la surface complexe périodisée consiste alors à appliquer la périodisation - ou quasi-périodisation - à ce reste.

$$\varepsilon(\alpha,\beta) \rightarrow \varepsilon\, (\alpha_{\text{quasi\_périodique}}(\alpha),\beta)$$

L'équation quasi_périodique considérée pour ce mode de réalisation peut être l'équation quasi_périodique ou quasi_périodique-2 définie plus haut en référence aux figures 3 et 4.
On définit alors la surface complexe quasi-périodique construite $T(\alpha,\beta)$ par la relation :

$$T(\alpha,\beta) = S_0 (\alpha,\beta) + \varepsilon\, (\alpha_{\text{quasi\_périodique}}(\alpha),\beta)\, N_0(\alpha,\beta)$$

L'équation définie ci-dessus reste valable lorsque la méridienne n'est pas confondue avec l'axe $\alpha=0$.
On pose alors $\alpha= \delta(\beta)$ l'équation de la méridienne et la surface complexe quasi-périodique construite $T(\alpha,\beta)$ est alors définie comme :

$$T(\alpha,\beta) = S_0 (\alpha,\beta) + \varepsilon\, (\alpha_{\text{quasi\_périodique}}(\alpha-\delta(\beta))+\delta(\beta),\beta)\, N_0(\alpha,\beta)$$

La figure 6 illustre la périodisation de la surface complexe dans un système de coordonnées sphériques. Les bandes du réseau sont parallèles si l'on se place en géométrie courbe.

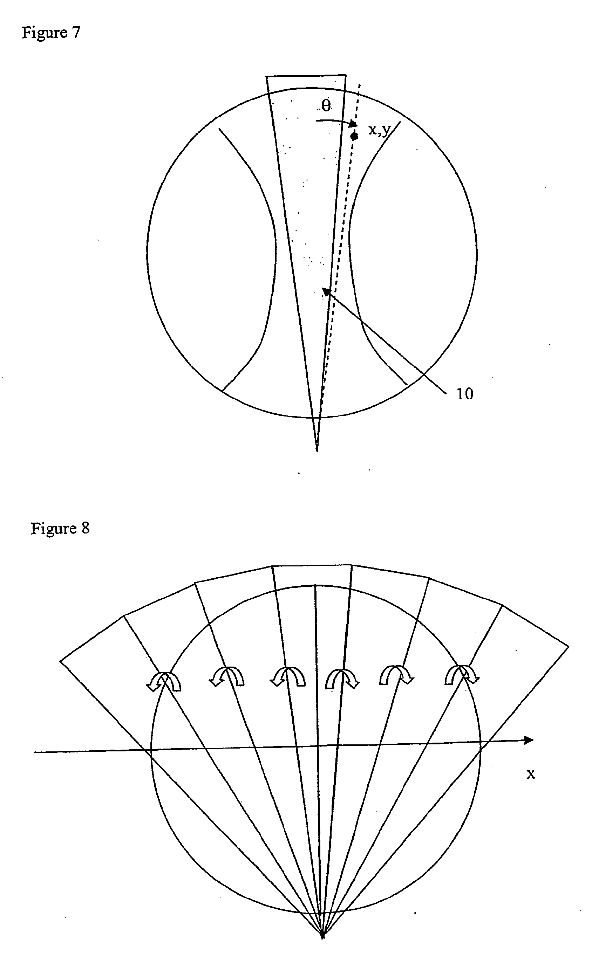

Les figures 7 et 8 illustrent schématiquement une variante de ce troisième mode de réalisation du procédé de construction de la surface complexe en réseau selon l'invention dans le cas où l'on considère la surface de départ en coordonnées non cartésiennes. Dans cette variante, on se place en coordonnées cylindriques $(r,\theta)$ et on utilise le procédé de périodisation - ou quasi-périodisation - sur la variable $\theta$.
La figure 7 montre la bande centrale 10 de la surface de départ et la figure 8 montre la surface périodisée S' construite avec la fonction de périodisation suivante :

$$S'(r, \theta) = S\, (r \sin(\theta),\, y_0+r \cos(\theta))$$

Avec S la surface de départ dont le sommet $(0,y0)$ est situé hors de la zone où se trouve définie la surface S. Dans le cas où le sommet est rejeté à l'infini, on retrouve le premier mode de réalisation tel qu'illustré sur la figure 1.
Si la surface d'origine S est symétrique suivant la verticale, cette variante du troisième mode de réalisation assure que la surface finale S' conservera son caractère continu. Par ailleurs, on peut aussi utiliser les différents procédés de quasi-périodisation sur la variable angulaire $\theta$.

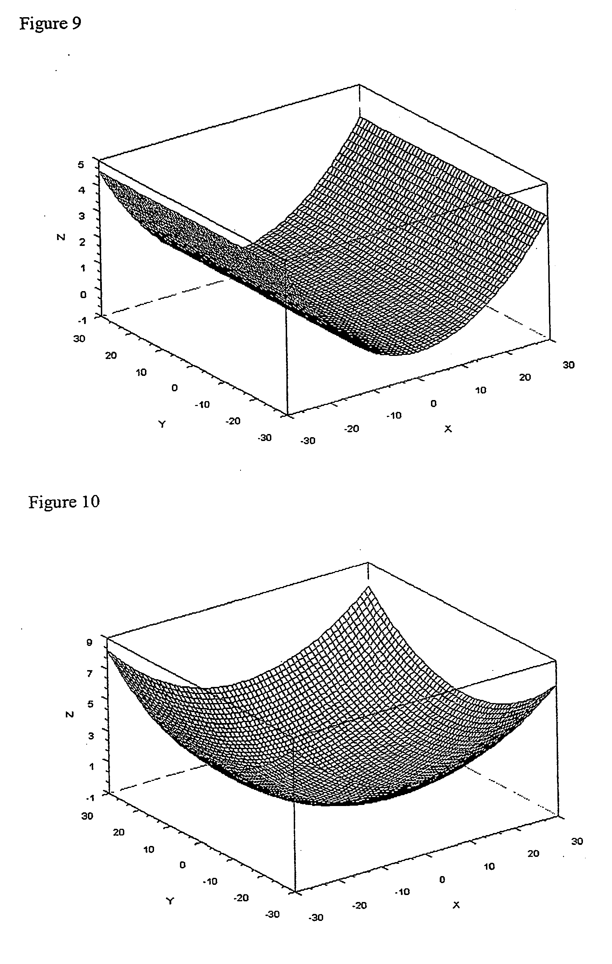

La figure 9 montre l'allure de la surface complexe construite avec le procédé de l'invention selon le mode de réalisation décrit à la figure 1. Une telle surface n'est pas très esthétique et induit des épaisseurs aux bords qui rendent le montage de la lentille en monture difficile. Pour pallier cet inconvénient, il est proposé de transformer la surface complexe de départ avant de procéder à l'étape de périodisation. Cette transformation peut être une déclinaison de la surface afin d'annuler la sphère au point de contrôle en vision de loin VL et de disposer d'une surface complexe progressive plate en vision de loin et présentant comme valeur de sphère au point de contrôle en vision de près VP l'addition A prescrite. Une telle méthode de déclinaison d'une surface complexe est décrite dans le document US-A-6 955 433. La transformation de la surface de départ peut aussi consister en une réduction de la valeur de sphère en vision de près, tout en conservant la même valeur de sphère en vision de loin VL. La bande sélectionnée pour périodiser la surface de départ présentera alors une addition de puissance moindre le long de la méridienne.

Le procédé de construction par périodisation ou quasi-périodisation d'une bande centrale sélectionnée, tel que décrit plus haut, est alors conduit avec une bande centrale sélectionnée sur une surface complexe correspondant à la surface de départ moins la surface de départ transformée.

Une fois la surface complexe périodisée ainsi construite, la sphère retirée à la surface de départ est rajoutée afin de disposer d'une surface complexe finale ayant les valeurs requises de sphère en vision de loin et en vison de près.

Avec un tel procédé de déclinaison associé au procédé de périodisation, on obtient une surface complexe telle qu'illustré sur la figure 10 qui répond mieux aux contraintes d'une surface de lentille ophtalmique.

Une telle construction de la surface complexe selon l'invention peut être formalisée de la manière suivante :

Soit S la surface de départ et T la surface complexe finale construite.

$$T = \text{Transf}_1(S) + P(S - \text{Transf}_2(S))$$

Avec $\text{Tranf}_1$ et $\text{Transf}_2$ les opérateurs de transformation de surface.
Et avec P un des opérateurs de périodisation tels que définis plus haut ;

$$
\begin{aligned}
x_{\text{quasi\_périodique\_1}}(x) \quad &= x_{i[x]} + (x - \xi_{i[x]}) &&\text{si } i[x] \text{ est pair} \\
&= x_{i[x]} - (x - \xi_{i[x]}) &&\text{si } i[x] \text{ est impair}
\end{aligned}
$$

$$
\begin{aligned}
x_{\text{quasi\_périodique\_2}}(x) \quad &= x_{i[x]} + (x - \xi_{i[x]}) &&\text{si } i[x] \text{ est pair} \\
&= x_{i[x]+1} - (x - \xi_{i[x]}) &&\text{si } i[x] \text{ est impair}
\end{aligned}
$$

En général, on aura $\text{Tranf}_1 = \text{Transf}_2$ afin de retrouver sur la surface finale la prescription de la surface de départ.

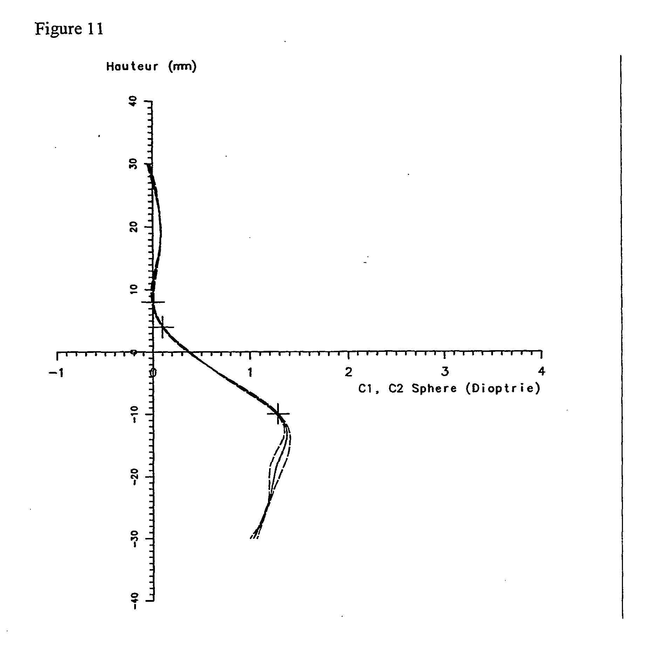

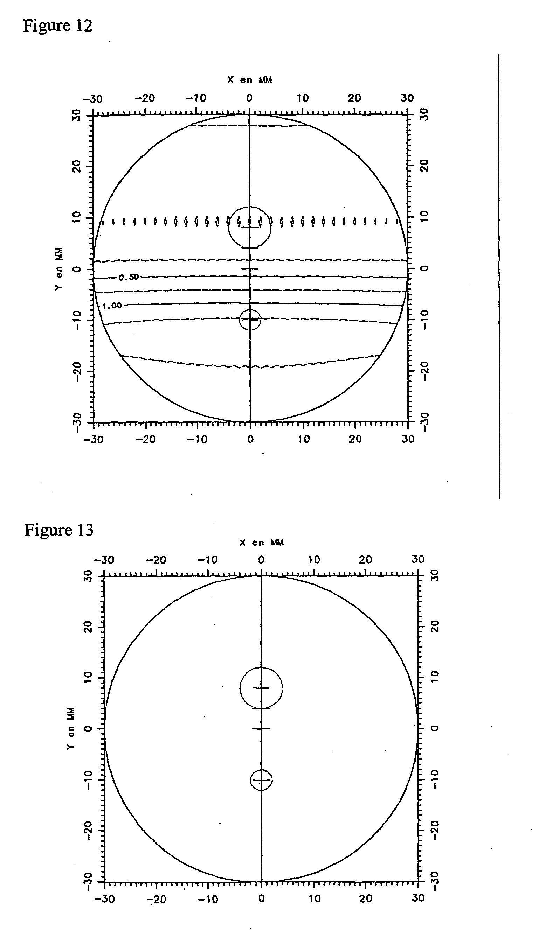

Les figures 11 et 13 illustrent une surface complexe d'une lentille selon un premier exemple de l'invention. La surface complexe finale est obtenue par le procédé de périodisation illustré sur la figure 1 avec un pas de réseau de 2 mm. La surface complexe de la lentille de départ a été transformée pour annuler la sphère au point de contrôle en vision de loin VL et disposer d'une surface complexe progressive plate en vision de loin pour effectuer la périodisation de surface. La lentille de ce premier exemple présente une prescription d'addition de puissance de +1,25D.

La figure 11 montre un diagramme des courbures principales et de la sphère sur la méridienne d'une face avant d'une lentille selon un premier exemple de l'invention. Les points sur la surface complexe de la lentille sont repérés sur la figure 11 comme sur les figures 12 et 13 par rapport à un repère orthonormé, ayant pour origine le centre géométrique (0, 0) de la lentille et dont l'axe des ordonnées est vertical et l'axe des abscisses horizontal. A la figure 11 est portée sur l'axe des abscisses la courbure ou la sphère en dioptries; sur l'axe des ordonnées est repérée la position sur la méridienne de la lentille, en millimètres. La figure 11 montre, à l'ordonnée y = 4 mm, un repère désigné comme la croix de montage CM de la lentille; il s'agit d'un point de centrage matérialisé sur la lentille qui est utilisé par l'opticien pour le montage de la lentille dans la monture et correspondant à la direction primaire du regard dans les conditions du porté. La croix de montage peut être repérée par un point matérialisé sur la lentille, avant montage dans la monture, par une croix ou toute autre marque telle qu'un point entouré d'un cercle tracé sur la lentille, ou par tout autre moyen approprié. Sur la figure 11 sont aussi reportés un repère indiquant le point de contrôle en vision de loin VL, à l'ordonné y = 8 mm, et un repère indiquant le point de contrôle en vision de près VP, à l'ordonnée y = -10 mm.

La figure 11 montre en trait plein la sphère moyenne et en traits interrompus les courbures principales $C_1 = (n-1)/R_1$ et $C_2 = (n-1)/R_2$ sur la méridienne. Les valeurs sont décalées à zéro à l'origine, où la sphère moyenne vaut en réalité 4,39 dioptries. On constate que le trait plein et les traits interrompus sont confondus - ce qui est représentatif d'un cylindre nul sur la méridienne de la surface complexe de la lentille.

La figure 12 montre une carte de sphère moyenne de la face avant de la lentille de la figure 11; comme cela est habituel, on a porté à la figure 12, dans un repère orthonormé, les lignes d'isosphère; ces lignes sont formées des points présentant une même valeur de la sphère moyenne. A la figure 12 sont représentées les lignes d'isosphère de 0 dioptrie à 1,25 dioptries avec un pas de 0,25 dioptrie. La figure 12 montre bien la périodisation de la surface complexe de la lentille. On peut clairement identifier des bandes verticales adjacentes formant un réseau horizontal à partir de la répétition des gradients horizontaux de sphère ($\Delta Sph_x$). En particulier, dans l'exemple illustré, la valeur de sphère reste sensiblement constante sur un axe horizontal.

La figure 13 montre une carte de cylindre de la face avant de la lentille de la figure 11. On remarque sur la figure 13 que le cylindre est quasiment nul - inférieur à 0,25 dioptries - sur l'ensemble de la surface complexe périodisée. On a ainsi construit une surface complexe progressive avec un cylindre non perceptible par le porteur sur l'ensemble de la surface.

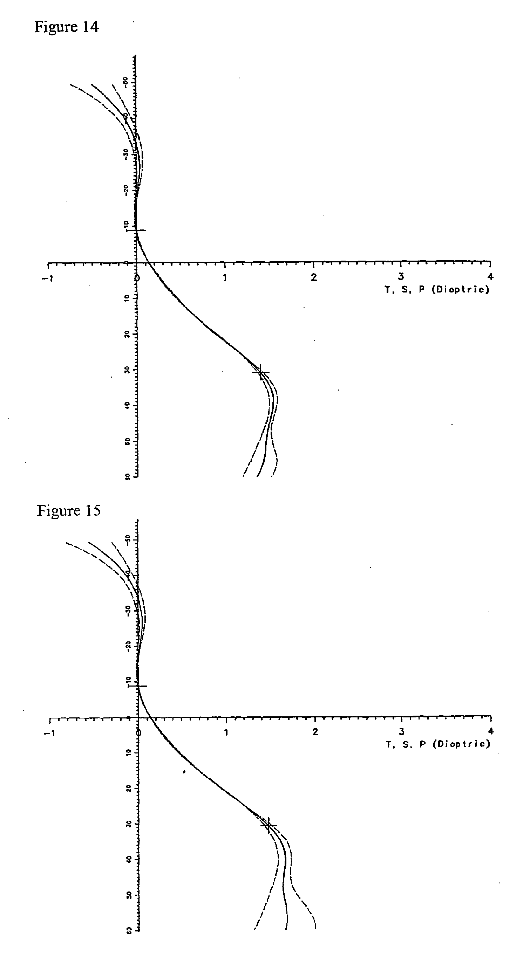

Les figures 14 à 21 illustrent les caractéristiques optiques de la lentille de ce premier exemple par comparaison avec une lentille de référence utilisée pour définir la surface complexe de départ. Ces figures montrent des lentilles comportant un prisme de 0,86° de base géométrique orienté à 270° dans le repère TABO. Le plan du verre est incliné par rapport à la verticale de 8° (angle pantoscopique). On a considéré une distance verre-oeil de 27 mm pour les mesures optiques sur les lentilles des figures 14 à 21.

Les figures 14 et 15 montrent des graphes de la puissance optique porteur le long de la méridienne, respectivement pour une lentille selon l'invention et pour la lentille de référence ; on a porté en ordonnées l'angle $\beta$ d'élévation du regard et en abscisses la puissance en dioptries. On a reporté en pointillés les puissances optiques minimale et maximale T, S et en trait plein la puissance optique P.

On peut noter sur les figures 14 et 15 une puissance optique porteur sensiblement constante autour du point de contrôle en vision de loin VL, une puissance optique porteur sensiblement constante autour du point de contrôle en vision de près VP et une progression régulière de la puissance le long de la méridienne. On remarquera que la progression de puissance optique porteur (1,4 dioptries) est supérieure à l'addition de puissance A prescrite (1,25 dioptries). Cette différence de valeur de puissance est due aux effets obliques.

On remarque surtout la similarité entre les graphes des figures 14 et 15. La lentille de l'invention présente donc une méridienne principale de progression identique à celle de la lentille de référence ; l'addition de puissance est donc bien atteinte sur la lentille de l'invention.

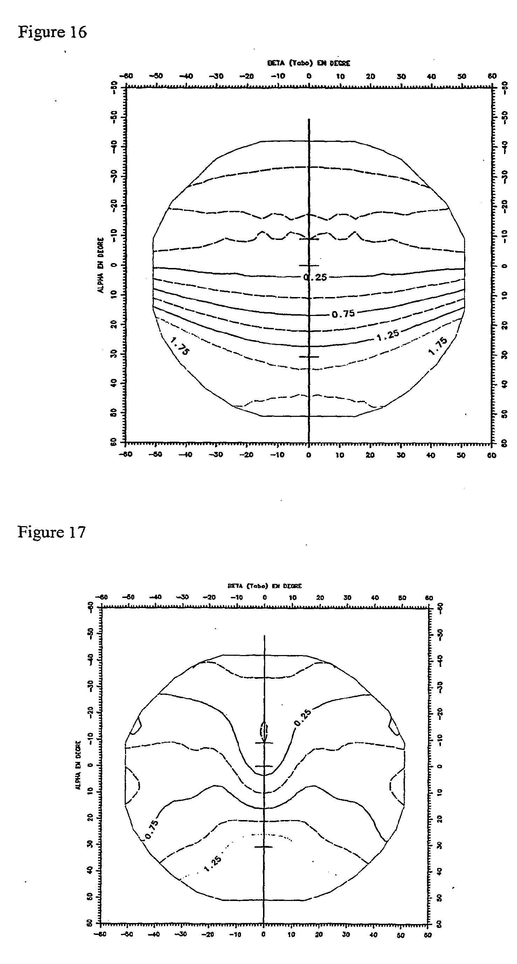

Les figures 16 et 17 montrent les lignes de niveau de la puissance optique porteur définie en une direction du regard et pour un point objet, respectivement pour une lentille selon l'invention et pour la lentille de référence. Comme cela est habituel, on a porté sur les figures 16 et 17, dans un repère en coordonnées sphériques, les lignes d'isopuissance; ces lignes sont formées des points présentant une même valeur de la puissance optique P. On a représenté les lignes d'isopuissance de 0,25 dioptrie à 1,75 dioptries.

On remarque que la lentille selon l'invention présente une répartition de puissance horizontale sensiblement constante par rapport à la lentille de départ. On peut aussi identifier des bandes sur la lentille à partir de la répétition des gradients horizontaux de puissance.

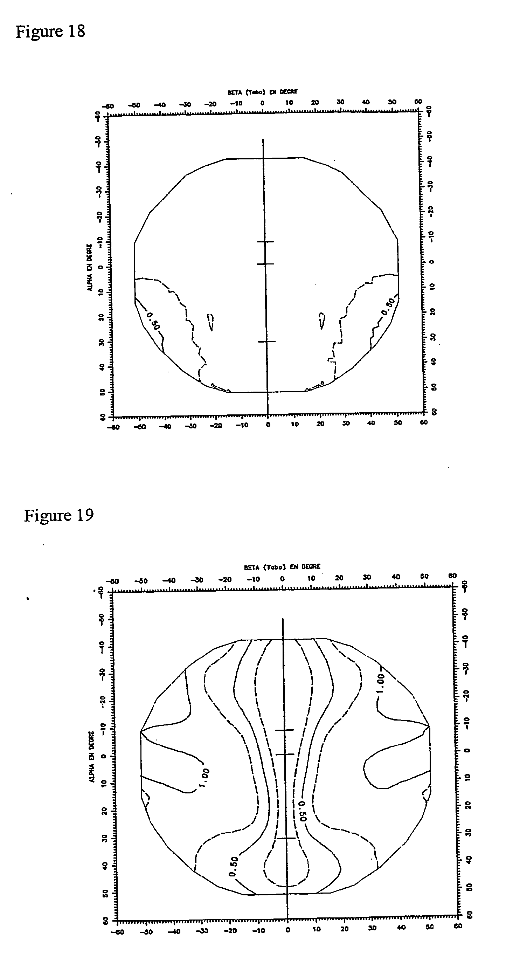

Les figures 18 et 19 montrent les lignes de niveau de l'amplitude de l'astigmatisme oblique au porté, respectivement pour une lentille selon l'invention et pour la lentille de référence. Comme cela est habituel, on a porté sur les figures 18 et 19, dans un repère en coordonnées sphériques, les lignes d'isoastigmatisme; ces lignes sont formées des points présentant une même valeur de l'amplitude d'astigmatisme telle que définie précédemment. On a représenté les lignes d'isoastigmatisme de 0,25 dioptrie à 1,25 dioptries.

On remarque que l'astigmatisme a quasiment disparu de la lentille selon l'invention. L'astigmatisme résiduel de la figure 18 en périphérie de la lentille selon l'invention est dû au fait que les rayons n'arrivent pas perpendiculairement à la surface du verre ; cet astigmatisme résiduel est dû aux effets obliques des rayons lumineux et peut être corrigé par optimisation de la face opposée de la surface opposée à la face portant la surface périodisée. La lentille de l'invention procure donc au porteur un meilleur confort en vision périphérique.

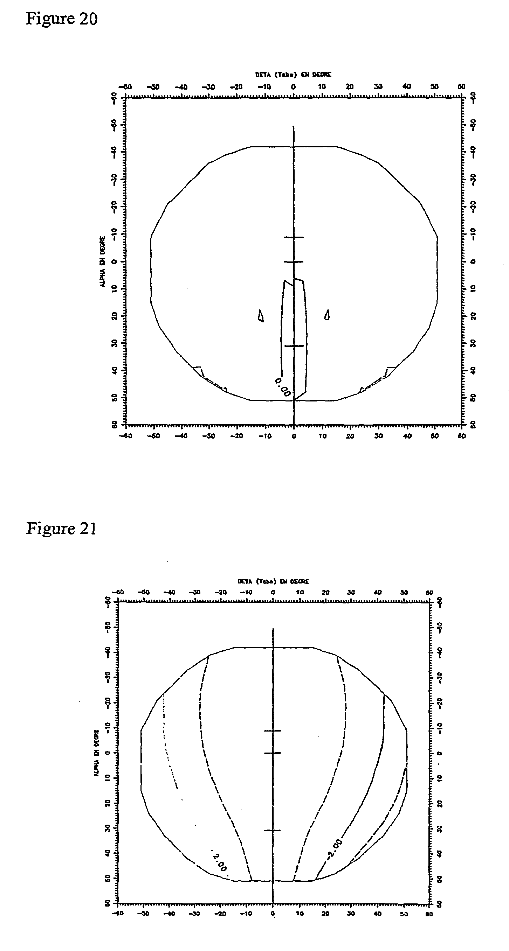

Les figures 20 et 21 montrent les lignes de niveau des déviations prismatiques horizontales au porté, respectivement pour une lentille selon l'invention et pour la lentille de référence.

On remarque que les déviations prismatiques horizontales ont quasiment disparu sur la lentille de l'invention par rapport à la lentille de référence. La lentille de l'invention procure donc au porteur un meilleur confort en vision périphérique

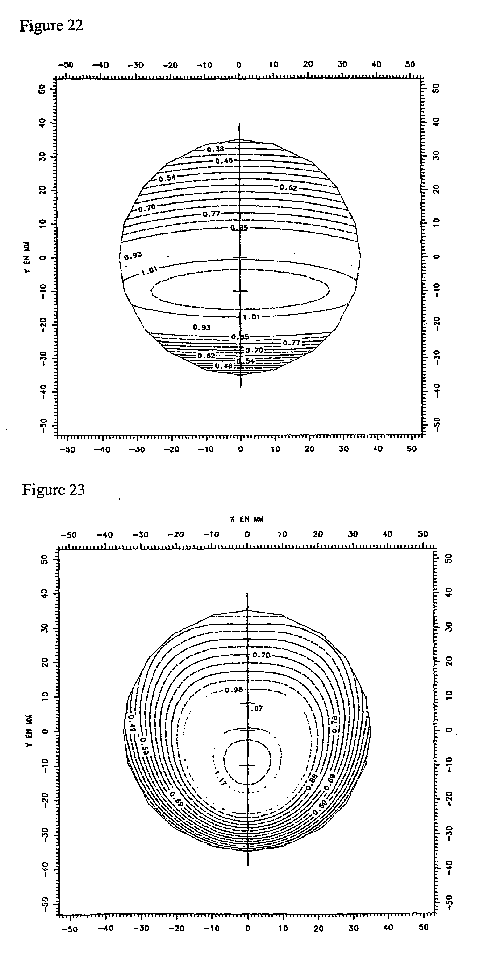

Les figures 22 et 23 montrent l'épaisseur du verre, respectivement pour une lentille selon l'invention et pour la lentille de référence. On a porté sur les figures 22 et 23, dans un repère en coordonnées cartésiennes, des lignes formées des points présentant une même valeur d'épaisseur.

Le verre de la lentille selon l'invention présente une épaisseur centre de 1,0 mm et une épaisseur bord de 0.32 mm. Le verre de la lentille de référence présente une épaisseur centre de 1,18 mm et une épaisseur bord de 0,3 mm.

On remarque que la lentille selon l'invention permet un gain d'épaisseur de 18 % au centre ce qui allège le poids du verre pour le porteur.

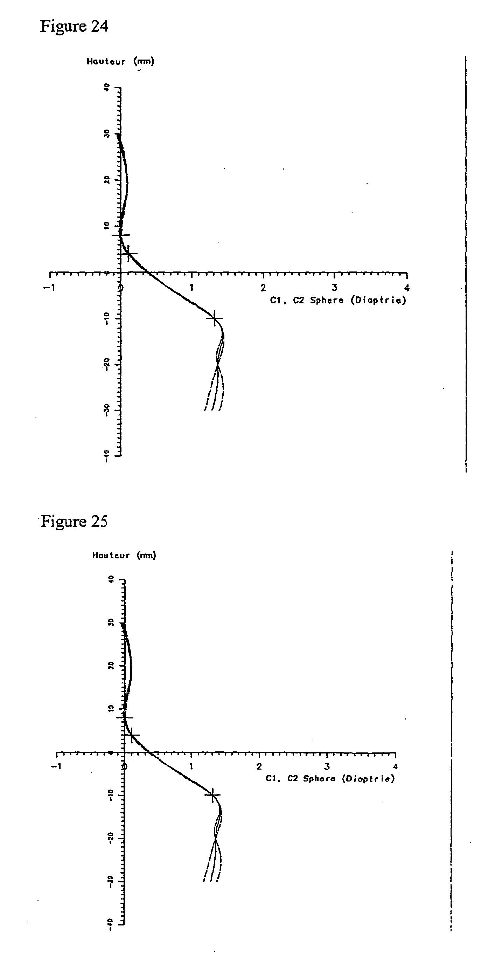

Les figures 24 à 29 illustrent une surface complexe d'une lentille selon un deuxième exemple de l'invention. La surface complexe finale est obtenue par le procédé de périodisation illustré sur la figure 1 et la surface complexe de la lentille de départ a été transformée pour réduire la valeur de sphère au point de contrôle en vision de près VP tout en conservant la valeur de sphère en vision de loin VL et ainsi disposer d'une surface complexe progressive ayant une addition de puissance réduite - de 0.5D sur cet exemple - le long de la méridienne pour effectuer la périodisation de surface. La lentille de ce deuxième exemple présente une prescription d'addition de puissance de +1,25D.

Les figures 24 et 25 montrent, respectivement pour la lentille selon le deuxième exemple de l'invention et pour la lentille de référence, un diagramme des courbures principales et de la sphère sur la méridienne d'une face avant de la lentille. Les points sur la surface complexe de la lentille sont repérés par rapport à un repère orthonormé, ayant pour origine le centre géométrique (0, 0) de la lentille et dont l'axe des ordonnées est vertical et l'axe des abscisses horizontal. On a porté sur l'axe des abscisses la courbure ou la sphère en dioptries; sur l'axe des ordonnées est repérée la position sur la méridienne de la lentille, en millimètres. Les figures 24 et 25 montrent, à l'ordonnée y = 4 mm, un repère désigné comme la croix de montage CM de la lentille, un repère indiquant le point de contrôle en vision de loin VL, à l'ordonnée y = 8 mm, et un repère indiquant le point de contrôle en vision de près VP, à l'ordonnée y = -10 mm.

Les figures 24 et 25 montrent en trait plein la sphère moyenne et en traits interrompus les courbures principales $C_1 = (n-1)/R_1$ et $C_2 = (n-1)/R_2$ sur la méridienne. Les valeurs sont décalées à zéro à l'origine, où la sphère moyenne vaut en réalité 4,26 dioptries. On constate que le trait plein et les traits interrompus sont confondus - ce qui est représentatif d'un cylindre nul sur la méridienne de la surface complexe de la lentille.

On remarque surtout la similarité entre les graphes des figures 24 et 25. La lentille de l'invention présente donc une méridienne principale de progression identique à celle de la lentille de référence ; l'addition de puissance est donc bien atteinte sur la lentille de l'invention.

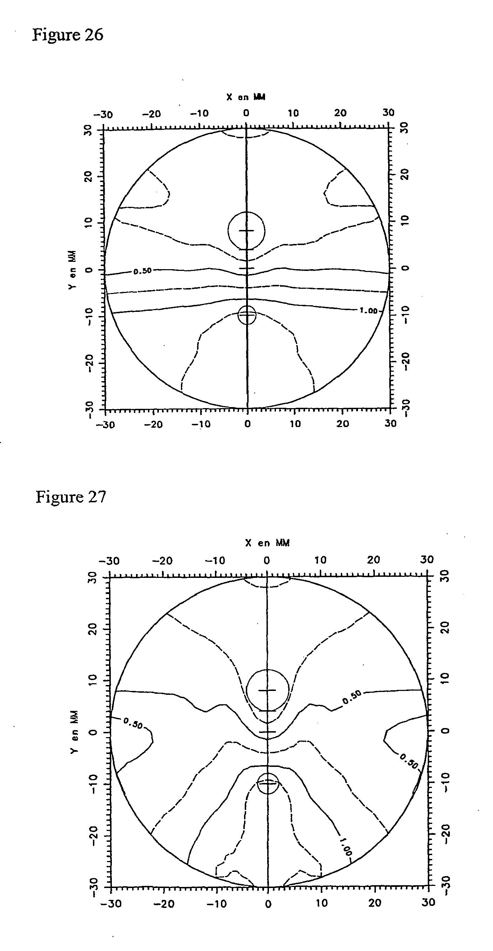

Les figures 26 et 27 montrent, respectivement pour la lentille selon le deuxième exemple de l'invention et pour la lentille de référence, des cartes de sphère moyenne de la face avant des lentilles des figures 24 et 25; comme cela est habituel, on a porté dans un repère orthonormé les lignes d'isosphère ; ces lignes sont formées des points présentant une même valeur de la sphère moyenne. Aux figures 26 et 27 sont représentées les lignes d'isosphère de 0 dioptrie à 1,25 dioptries avec un pas de 0,25 dioptrie. La figure 26 montre aussi la périodisation de la surface complexe de la lentille. Néanmoins, dans ce second exemple et contrairement au premier, la valeur de sphère n'est pas constante sur chaque axe horizontal de la surface. En effet, l'opérateur de transformation choisi - diminution de la sphère en VP - implique de rajouter une addition à la surface périodisée ; introduisant ainsi un gradient de sphère horizontal non nul au réseau horizontal de bandes construit. On remarque cependant que le gradient de sphère horizontal est plus faible pour la lentille de l'invention (figure 26) comparée avec la lentille de référence (figure 27).

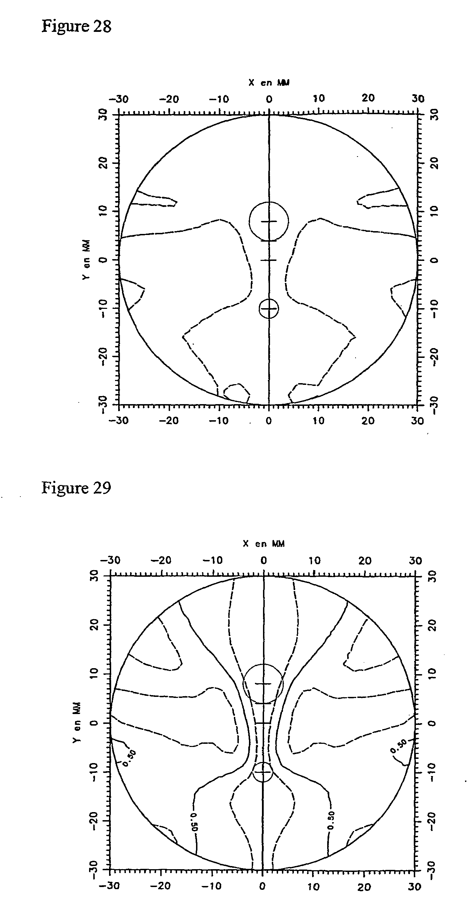

Les figures 28 et 29 montrent, respectivement pour la lentille selon le deuxième exemple de l'invention et pour la lentille de référence, des cartes de cylindre de la face avant des lentilles des figures 24 et 25.

On remarque que le cylindre est nettement plus faible sur la surface de la lentille selon l'invention (figure 28) comparée avec la lentille de référence (figure 29). Néanmoins, dans ce second exemple et contrairement au premier, la valeur de cylindre n'est pas sensiblement nulle sur toute la surface de la lentille selon l'invention. En effet, l'opérateur de transformation choisi - diminution de la sphère en VP - implique de rajouter une addition à la surface périodisée ; introduisant ainsi un gradient de cylindre non nul sur la surface complexe construite et par conséquent du cylindre.

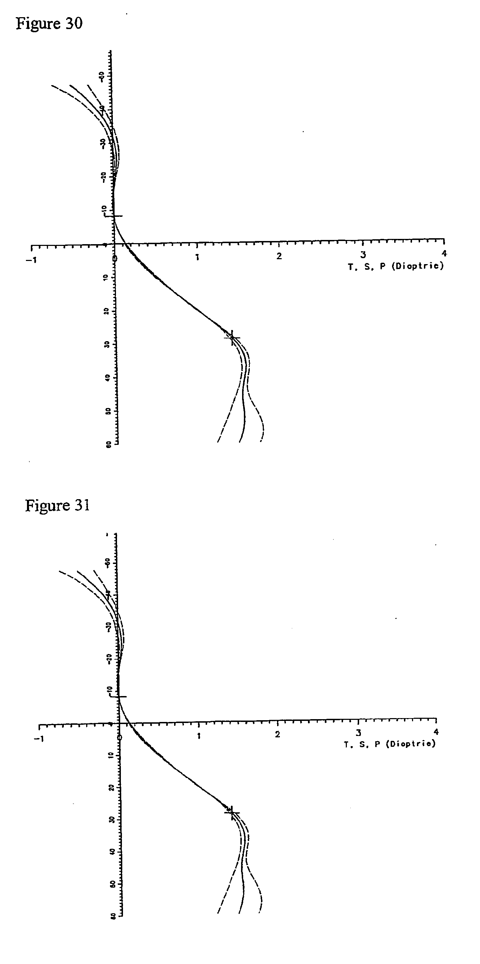

Les figures 30 à 37 illustrent les caractéristiques optiques de la lentille de ce deuxième exemple par comparaison avec une lentille de référence utilisée pour définir la surface complexe de départ. Ces figures montrent des lentilles comportant un prisme de 0,95° de base géométrique orienté à 270° dans le repère TABO. Le plan du verre est incliné par rapport à la verticale de 8° (angle pantoscopique). On a considéré une distance verre-oeil de 27 mm pour les mesures optiques sur les lentilles des figures 30 à 37.

Les figures 30 et 31 montrent des graphes de la puissance optique porteur le long de la méridienne, respectivement pour une lentille selon l'invention et pour la lentille de référence ; on a porté en ordonnées l'angle $\beta$ d'élévation du regard et en abscisses la puissance en dioptries. On a reporté en pointillés les puissances optiques minimale et maximale T, S et en trait plein la puissance optique P.

On peut noter sur les figures 30 et 31 une puissance optique porteur sensiblement constante autour du point de contrôle en vision de loin VL, une puissance optique porteur sensiblement constante autour du point de contrôle en vision de près VP et une progression régulière de la puissance le long de la méridienne. On remarquera que la progression de puissance optique porteur (1,4 dioptries) est supérieure à l'addition de puissance A prescrite (1,25 dioptries). Cette différence de valeur de puissance est due aux effets obliques.

On remarque surtout la similarité entre les graphes des figures 30 et 31. La lentille de l'invention présente donc une méridienne principale de progression identique à celle de la lentille de référence ; l'addition de puissance est donc bien atteinte sur la lentille de l'invention.

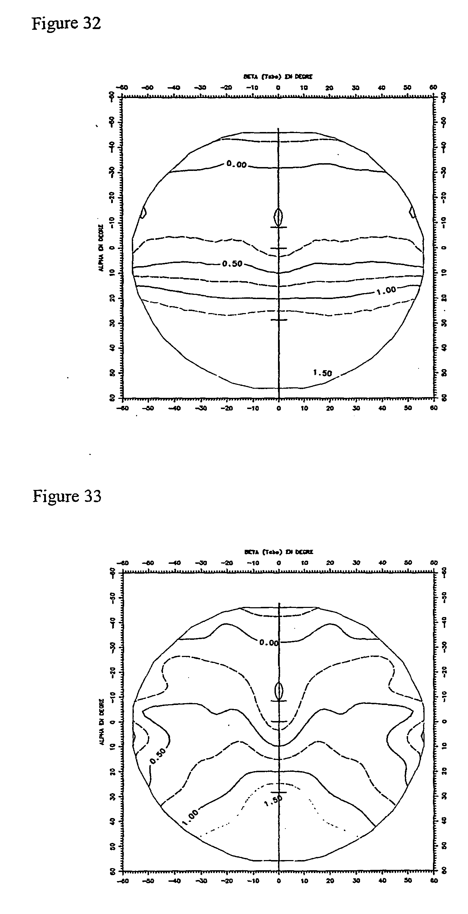

Les figures 32 et 33 montrent les lignes de niveau de la puissance optique porteur définie en une direction du regard et pour un point objet, respectivement pour une lentille selon l'invention et pour la lentille de référence. Comme cela est habituel, on a porté sur les figures 32 et 33, dans un repère en coordonnées sphériques, les lignes d'isopuissance; ces lignes sont formées des points présentant une même valeur de la puissance optique P. On a représenté les lignes d'isopuissance de 0,25 dioptrie à 1,5 dioptries.

On remarque que la lentille selon l'invention présente une répartition de puissance horizontale sensiblement constante par rapport à la lentille de départ.

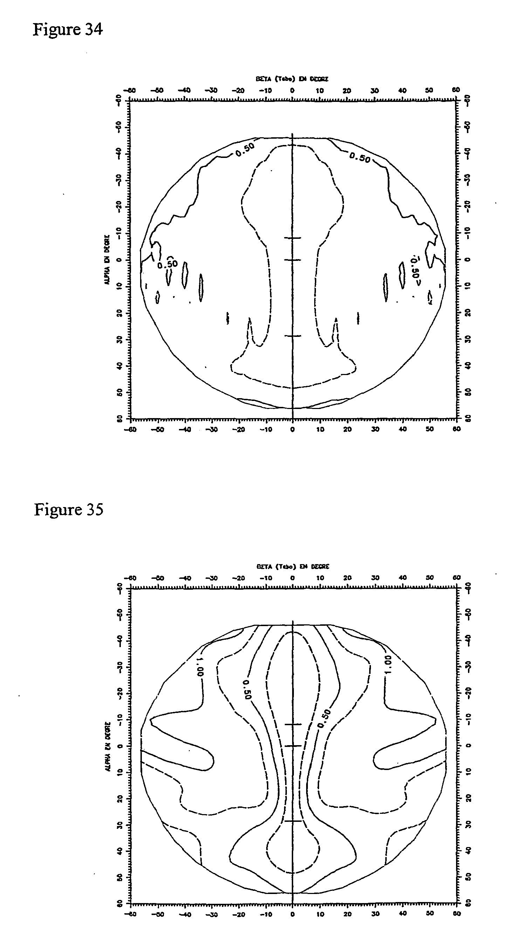

Les figures 34 et 35 montrent les lignes de niveau de l'amplitude de l'astigmatisme oblique au porté, respectivement pour une lentille selon l'invention et pour la lentille de référence. Comme cela est habituel, on a porté sur les figures 34 et 35, dans un repère en coordonnées sphériques, les lignes d'isoastigmatisme; ces lignes sont formées des points présentant une même valeur de l'amplitude d'astigmatisme telle que définie précédemment. On a représenté les lignes d'isoastigmatisme de 0,25 dioptrie à 1,25 dioptries.

On remarque que l'astigmatisme oblique a été fortement réduit sur la lentille de l'invention. La lentille de l'invention procure donc au porteur un meilleur confort en vision périphérique.

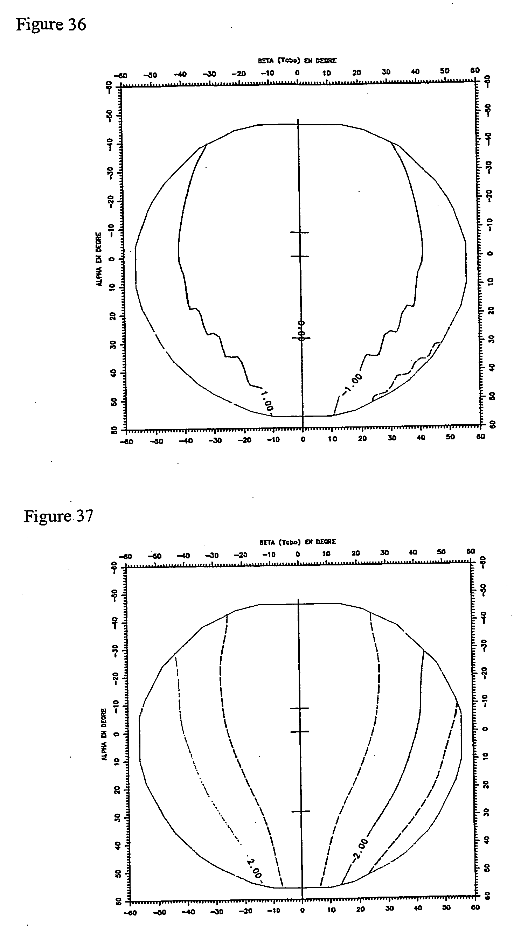

Les figures 36 et 37 montrent les lignes de niveau des déviations prismatiques horizontales au porté, respectivement pour une lentille selon l'invention et pour la lentille de référence.

On remarque que les déviations prismatiques horizontales ont été fortement diminuées sur la lentille de l'invention par rapport à la lentille de référence. La lentille de l'invention procure donc au porteur un meilleur confort en vision périphérique

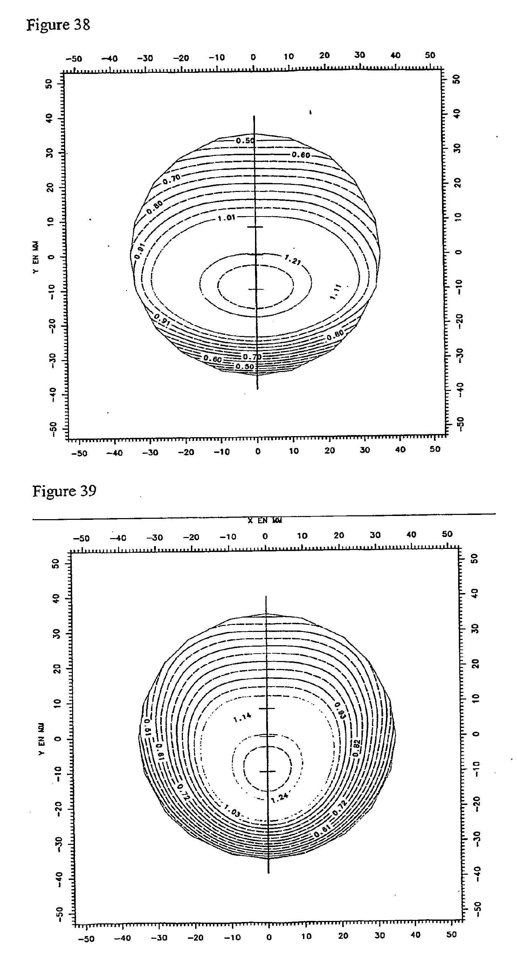

Les figures 38 et 39 montrent l'épaisseur du verre, respectivement pour une lentille selon l'invention et pour la lentille de référence. On a porté sur les figures 38 et 39, dans un repère en coordonnées cartésiennes, des lignes formées des points présentant une même valeur d'épaisseur.

Le verre de la lentille selon l'invention présente une épaisseur centre de 1,21 mm et une épaisseur bord de 0,30 mm. Le verre de la lentille de référence présente une épaisseur centre de 1,25 mm et une épaisseur bord de 0,30 mm. On remarque que la lentille selon l'invention permet un gain d'épaisseur de 4 % au centre ce qui allège le poids du verre pour le porteur.

La lentille obtenue par le procédé selon l'invention apporte un confort accru au porteur en réduisant substantiellement les aberrations optiques de type astigmatisme, déviation prismatique et distorsion.

L'invention a été décrite en référence à des exemples particuliers à partir d'une surface complexe de départ donnée. Il est entendu que d'autres surfaces de départ peuvent être utilisées pour sélectionner la bande centrale à reproduire pour former la surface complexe périodisée ou quasi-périodisée selon l'invention. Il est également entendu que les rôles de faces avant et arrière peuvent être intervertis sans sortir du cadre de l'invention. L'homme du métier comprend aussi aisément que la lentille en cause peut présenter deux surfaces complexes périodisées ou quasi-périodisées disposées sur deux faces d'un même verre ou reparties sur deux couches de verres assemblées pour former une lentille.

**Revendications**

1. Un procédé de détermination d'une surface complexe d'une lentille ophtalmique progressive mis en oeuvre par ordinateur, le procédé comprenant les étapes consistant à :

   - choisir une surface complexe de départ présentant une méridienne principale de progression avec une addition de puissance entre un point de référence en vision de loin et un point de référence en vision de près ;
   - sélectionner une bande centrale (10) incluant la méridienne principale de progression ;
   - reproduire la bande centrale sélectionnée (10) de part et d'autre de la méridienne principale de progression ;
   - construire la surface complexe de la lentille en reproduisant successivement des bandes sélectionnées vers la périphérie de la lentille.

2. Le procédé de la revendication 1, comprenant en outre une étape consistant à :

   - transformer la surface complexe de départ avec un premier opérateur de transformation, l'étape de construction de la surface complexe comprenant alors les étapes consistant à :
   - construire une surface complexe périodique ou quasi-périodique en reproduisant successivement des bandes sélectionnées sur une surface correspondant à la surface de départ moins la surface de départ transformée ; et
   - ajouter à cette surface complexe périodique ou quasi-périodique une surface de départ transformée avec un deuxième opérateur de transformation.

3. Le procédé de la revendication 2, dans lequel le premier opérateur de transformation annule la valeur de sphère au point de contrôle en vision de loin.

4. Le procédé de la revendication 2, dans lequel le premier opérateur de transformation réduit la valeur de sphère au point de contrôle en vision de près.

5. Le procédé de l'une des revendications 2 à 4, dans lequel le premier opérateur de transformation et le deuxième opérateur de transformation sont identiques.

6. Le procédé de l'une des revendications 1 à 5, **caractérisé en ce que** l'étape de reproduction d'une bande sélectionnée consiste à juxtaposer la bande sélectionnée.

7. Le procédé de l'une des revendications 1 à 5, **caractérisé en ce que** l'étape de reproduction d'une bande sélectionnée consiste à symétriser la bande sélectionnée.

8. Le procédé de l'une des revendications 1 à 7, **caractérisé en ce que** l'étape de construction de la surface complexe de la lentille comprend en outre une étape consistant à translater une bande centrale élargie ou diminuée pour la juxtaposer aux bandes construites.

**Patentansprüche**

1. Verfahren zum Bestimmen einer komplexen Oberfläche einer progressiven ophthalmischen Linse, das von einem Computer ausgeführt wird, wobei das Verfahren die Schritte umfasst, die darin bestehen:

   - eine komplexe Ausgangsoberfläche zu wählen, die einen Hauptprogressionsmeridian mit zusätzlicher Leistung zwischen einem Fernsicht-Referenzpunkt und einen Nahsicht-Referenzpunkt aufweist;
   - ein Mittelband (10) zu wählen, das den Hauptprogressionsmeridian enthält;
   - das ausgewählte Mittelband (10) beiderseits des Hauptprogressionsmeridians zu reproduzieren;
   - die komplexe Oberfläche der Linse durch aufeinander folgendes Reproduzieren ausgewählter Bänder in Richtung zum Umfang der Linse zu konstruieren.

2. Verfahren nach Anspruch 1, das außerdem einen Schritt umfasst, der darin besteht:

   - die komplexe Ausgangsoberfläche mit einem ersten Transformationsoperator zu transformieren, wobei der Schritt des Konstruierens der komplexen Oberfläche dann die Schritte umfasst, die darin bestehen:
   - eine periodische oder quasiperiodische komplexe Oberfläche durch aufeinander folgendes Reproduzieren ausgewählter Bänder auf einer Oberfläche, die der Ausgangsoberfläche minus der transformierten Ausgangsoberfläche entspricht, zu konstruieren; und
   - zu dieser periodischen oder quasiperiodischen komplexen Oberfläche eine transformierte Ausgangsoberfläche mit einem zweiten Transformationsoperator hinzuzufügen.

3. Verfahren nach Anspruch 2, wobei der erste Transformationsoperator den Kugelwert am Fernsicht-Steuerpunkt zu null macht.

4. Verfahren nach Anspruch 2, wobei der erste Transformationsoperator den Kugelwert am Nahsicht-Steuerpunkt reduziert.

5. Verfahren nach einem der Ansprüche 2 bis 4, wobei der erste Transformationsoperator und der zweite Transformationsoperator gleich sind.

6. Verfahren nach einem der Ansprüche 1 bis 5, **dadurch gekennzeichnet, dass** der Schritt des Reproduzierens eines ausgewählten Bandes darin besteht, das ausgewählte Band daneben anzuordnen.

7. Verfahren nach einem der Ansprüche 1 bis 5, **dadurch gekennzeichnet, dass** der Schritt des Reproduzierens eines ausgewählten Bandes darin besteht, das ausgewählte Band symmetrisch zu machen.

8. Verfahren nach einem der Ansprüche 1 bis 7, **dadurch gekennzeichnet, dass** der Schritt des Konstruierens der komplexen Oberfläche der Linse außerdem einen Schritt umfasst, der darin besteht, ein verbreitertes oder ver-

**EP 2 095 176 B1**

schmälertes Mittelband translatorisch zu bewegen, um es neben den konstruierten Bändern anzuordnen.

## Claims

1. Computer-implemented method for determining a complex surface for a progressive ophthalmic lens, the method comprising steps consisting in:

   - choosing a complex starting surface having a main progression meridian with an addition power between a far-vision reference point and a near-vision reference point;
   - selecting a central strip (10) containing the main progression meridian;
   - reproducing the selected central strip (10) on either side of the main progression meridian; and
   - constructing the complex surface of the lens by reproducing selected strips in succession to the periphery of the lens.

2. Method according to Claim 1, furthermore comprising a step consisting in:

   - transforming the complex starting surface with a first transformation operator, the step of constructing the complex surface then comprising steps consisting in:
   - constructing a periodic or quasi-periodic complex surface by reproducing selected strips in succession over a surface corresponding to the starting surface minus the transformed starting surface; and
   - adding, to this periodic or quasi-periodic complex surface, a starting surface transformed with a second transformation operator.

3. Method according to Claim 2, in which the first transformation operator cancels out the sphere value at the far-vision test point.

4. Method according to Claim 2, in which the first transformation operator decreases the sphere value at the near-vision test point.

5. Method according to one of Claims 2 to 4, in which the first transformation operator and the second transformation operator are identical.

6. Method according to one of Claims 1 to 5, **characterized in that** the step of reproducing a selected strip consists in juxtaposing the selected strip.

7. Method according to one of Claims 1 to 5, **characterized in that** the step of reproducing a selected strip consists in mirroring the selected strip.

8. Method according to one of Claims 1 to 7, **characterized in that** the step of constructing the complex surface of the lens furthermore comprises a step consisting in translating a central strip that has been made larger or smaller, in order to juxtapose it with constructed strips.

14

Figure 1

Figure 2

Figure 3

Figure 4

Figure 5

$N_0(\alpha,\beta)$

$\varepsilon(\alpha,\beta)$

Point $S(\alpha,\beta)$

Point $S_0(\alpha,\beta)$

Surface progressive

Surface d'appui

Figure 6

10

Figure 7

Figure 8

Figure 9

Figure 10

Figure 11

Hauteur (mm)

C1, C2 Sphere (Dioptrie)

Figure 12

Figure 13

Figure 14

T, S, P (Dioptrie)

Figure 15

T, S, P (Dioptrie)

23

Figure 16

Figure 17

Figure 18

Figure 19

Figure 20

Figure 21

Figure 22

Figure 23

Figure 24

Figure 25

Figure 26

Figure 27

Figure 28

Figure 29

Figure 30

Figure 31

Figure 32

Figure 33

Figure 34

Figure 35

Figure 36

Figure 37

Figure 38

Figure 39

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- FR 2683642 A
- FR 2704327 A
- WO 9812590 A
- FR 2489971 A
- WO 2004070426 A
- US 6955433 A

**Littérature non-brevet citée dans la description**

- **THIERRY BAUDART.** PAL performance analysis for torical prescription. *Vision Science and its applications, Santa-Fe New Mexico, Feb. 1996 Technical Digest series,* Février 1996, vol. 1